# EUROPEAN PATENT APPLICATION

(11) **EP 2 706 467 A1**
(43) Date of publication of application: **12.03.2014**
(21) Application number: 12183153.1
(22) Date of filing: 05.09.2012
(51) Int. Cl.: G06F 17/30

(54) **Method for accessing a content item in a cloud storage system, and a corresponding cloud broker, cloud cache agent and client application**

(71) Applicant: AWINGU NV, 9080 Lochristi (BE)
(72) Inventor: Pizurica, Veselin, 9052 Gent (BE); Bonne, Kurt, 1130 Haren (BE); Abdelhameed, Mohab, 11799 Cairo (EG)
(74) Representative: IP Hills NV

(57) **Abstract**

In a cloud storage system (103), an editable version of each content item is stored in a cloud data store (132) and one or more HTML versions of content items are stored in a cloud cache store (133). In order to access a content item, a client application (111) sends a request (141) to a cloud broker (102), specifying a user action that is either "view" or "edit". In case the user action is "edit", the cloud broker (102) sends a request (142) for retrieving the editable version of the content item from the cloud data store (132). In case the user action is "view", the cloud broker (102) sends a request (144) for obtaining a URL to one of the HTML versions of the content item to a cloud cache agent (131).

## Description

### Field of the Invention

The present invention generally relates to storage of content items, e.g. user data files, in a cloud storage system, typically a networked pool of web servers located in one or several data centres, operated and hosted by a third party different from the user. The invention in particular aims at reducing the time needed to access content items stored in a cloud storage system when the content item is accessed for viewing purposes only.

### Background of the Invention

When storing content items, e.g. files, documents, objects, images, movies, etc., in a cloud storage system, these content items become accessible to the user from any location through any device. A document stored in a cloud storage system can for instance be accessed from a desktop computer in the office, from a laptop computer at home, from a tablet PC in a meeting with a client, from a smartphone in a train, etc. Often, the user shall request access to a content item from his desktop computer or laptop computer in order to edit or change the content item. If however a content item is accessed from a smartphone, TV set or tablet PC, the user usually consults the document for browsing its content in a read-only or view-only mode.

Since a content item can be accessed from a variety of devices, the content item typically must be rendered and its format must be suited to the display size, resolution, etc. of the device used to access the content item.

In case a content item is accessed for view purposes only, the delay resulting from tunnelling and extra round trips for rendering the content item, is excessive having a negative impact on the user experience and usage of network resources up to the cloud data store.

It is an objective of the present invention to disclose a method for accessing a content item in a cloud storage system that overcomes the above mentioned drawbacks. More particularly, it is an objective of the present invention to disclose a method for accessing a content item in a cloud storage system that avoids excessive delays and usage of network resources.

### Summary of the Invention

According to the present invention, the above mentioned objectives are realized by the method of claim 1 for accessing a content item in a cloud storage system wherein an editable version of each content item is stored in a cloud data store and one or more HTML versions of content items are stored in a cloud cache store, the method comprising:
A. sending from a client application to a cloud broker a request for accessing the content item, the request specifying a user action that is either "view" or "edit";
B. verifying at the cloud broker if the user action is "view" or "edit"; and
C. in case the user action is "edit":
   C1. sending from the cloud broker to a dedicated application a request for retrieving the editable version of the content item from the cloud data store; and
   C2. delivering the editable version of the content item from the cloud data store to the client application; or
D. in case the user action is "view":
   D1. sending from the cloud broker to a cloud cache agent a request for obtaining a URL to one of the HTML versions of the content item; and
   D2. delivering the URL to one of the HTML versions of the content item from the cloud cache agent to the client application.

Thus, the invention foresees in a cloud cache store for caching content items in HTML format for viewing purposes. Each request for a content item shall be submitted with a cloud broker and specify if the content item is accessed for "view" purposes or "edit" purposes. When the content item is accessed for edit purposes, the cloud broker shall tunnel the request towards a cloud application that retrieves the editable version of the content item from the cloud data store and delivers it to the client application. When the content item is accessed for view purposes only, the cloud broker shall request a cloud cache agent, responsible for generating the HTML versions of the content item, to deliver the appropriate HTML version to the client application. The cloud cache agent shall retrieve a URL to the appropriate HTML version from the cloud cache store. The cloud cache agent may generate and store the appropriate HTML version in case it is not yet existing as will be further explained below. Hence, based on the device action, i.e. "Edit" or "view", the content item will be delivered in a format suitable for the device with minimal delay and minimal impact on network resource usage. As a result, user experience when content is accessed for viewing purposes only from e.g. a tablet PC or smartphone, will increase substantially.

It is noticed that the gain in efficiency and user experience of the present invention depends upon the caching policy for caching cloud content in HTML format. Such policy must specify which items will be cached, how long these items will be cached, what formats of an item will be cached, etc. Although the present invention is not limited to any particular caching policy, this patent application further below describes some preferred choices for the caching policy.

It is further noticed that it is already known for instance from Dropbox to cache files stored in a cloud storage system and having the same MD5 checksum. This way, storage space can be reduced if multiple users store the same file in the Dropbox cloud storage system. Dropbox however does not suggest or teach to cache HTML versions of cloud content items that will be delivered to client devices/applications that access a content item for read-only purposes.

It is further noticed that is already known that many applications provide HTML representations of documents for viewing purposes.

According to an optional aspect of the present method for accessing a content item in a cloud storage system, in case no HTML version of the content item is available when executing step D1, the cloud cache agent generates an HTML version, stores the HTML version in the cloud cache store and obtains a URL to the HTML version generated and stored in the cloud cache store.

Indeed, in a preferred embodiment of the invention, the cloud cache agent generates the appropriate HTML version of a content item when a view request is received and the HTML version is not available in the cloud cache store. Alternatively, the cloud cache agent could return the URL to a less optimal HTML version of the content item that is available in the cloud cache store, or the cloud cache agent could tunnel the request to a cloud application that renders the editable version in case no HTML version is available in the cloud cache store.

Further optionally, as defined by claim 3, the cloud cache store is regularly updated.

Indeed, preferably, the cloud cache store contains HTML versions of the most popular content items. This way, the efficiency in terms of reducing delays, round trip times and network resource usage will be optimal.

As further defined by claim 4, regularly updating the cloud cache store may comprise eviction of HTML versions of content items whose view count during a recent time interval is below a predetermined threshold.

Thus, the cloud cache store may implement an eviction policy based on view count. The eviction policy shall typically depend on the storage allocation per user. The cloud cache agent may for instance implement an eviction policy that keeps 20 % of the cache store free. Old cached HTML versions which have not or few times be consulted recently will be removed from the cloud cache store.

Alternatively or complementary, as defined by claim 5, regularly updating the cloud cache store may comprise eviction of HTML versions of content items whose last view date and time is older than a predetermined threshold.

Hence, the cloud cache store can also implement an eviction policy based on the last view date/time. When an HTML version has not been consulted for a certain time, it will be removed from the cloud cache store, again to free space for more popular content items.

According to another optional aspect of the method for accessing a content item in a cloud storage system according to the present invention, defined by claim 6:
- the cloud cache agent stores information indicative for types of devices used by one or more users to access the content item; and
- the one or more HTML versions of the content item are prepared to suit the types of devices used by the one or more users.

Thus, the cloud cache agent preferably uses information about the device type(s) of the user(s) of a content item in order to generate the optimal HTML version(s) of the content item for this/these device(s). The cloud cache agent can store information about the device(s) available per user and generate HTML versions only in formats that are suitable for representation on this/these device(s). The formats may consider parameters like a different image size, different encoding schemes for video, different HTML layouts, etc. Upon receipt of a "view" request from a client application, that contains the device type in its header in case of an HTTP request), the HTTP agent shall forward the request to the cloud cache agent which will return an URL to the most suitable HTML version for that device.

Further optionally, as defined by claim 7, the cloud cache storage may comprise individual users cache space for storage of one or more HTML versions of content items that are used by a single user and common cache space for storage of one or more HTML versions of content items that are used by plural users.

Indeed, there may be instances where a single content item, e.g. a file, is common between different users. If a content items for instance have the same MD5 checksum, the cloud cache agent may therefore decide to move the content item from the individual users' cache spaces to a common cloud cache space. The eviction policy must be updated to track all users that share a same file before eviction takes place.

In addition to a method for accessing a content item in a cloud storage system as defined by claim 1, the present invention also relates to a corresponding cloud broker as defined by claim 8, the cloud broker being adapted for use in a cloud storage system wherein an editable version of each content item is stored in a cloud data store and one or more HTML versions of content items are stored in a cloud cache store, the cloud broker comprising:
A. an interface for receiving from a client application a request for accessing a content item, the request specifying a user action that is either "view" or "edit";
B. verification logic for verifying if the user action is "view" or "edit";
C. an interface for sending to a dedicated application a request for retrieving the editable version of the content item from the cloud data store and for delivering the editable version of the content item to the client application in case the user action is "edit"; and
D. an interface for sending to a cloud cache agent a request for obtaining a URL to one of the HTML versions of the content item and for delivering the URL to one of the HTML versions of the content item to the client application in case the user action is "view".

The present invention further also relates to a corresponding cloud cache agent as defined by claim 9, the cloud cache agent being adapted for use in a cloud storage system wherein an editable version of each content item is stored in a cloud data store and one or more HTML versions of content items are stored in a cloud cache store, the cloud cache agent comprising:
- an interface for receiving from a cloud broker a request for obtaining a URL to one of the HTML versions of a content item;
- an interface for delivering said URL to one of the HTML versions of the content item to a client application that has sent a request for accessing the content item, the request specifying a user action that is "view"; and
- logic for generating an HTML version, storing the HTML version in the cloud cache store and obtaining a URL to the HTML version generated and stored in the cloud cache store in case no HTML version of the content item is available.

In addition, the present invention relates to a client application as defined by claim 10, the client application being adapted for use in a cloud storage system wherein an editable version of each content item is stored in a cloud data store and one or more HTML versions of content items are stored in a cloud cache store, the client application comprising:
- an interface for sending to a cloud broker a request for accessing the content item, the request specifying a user action that is either "view" or "edit";
- an interface for receiving the editable version of the content item from the cloud data store in case the user action is "edit"; and
- an interface for receiving an URL to one of the HTML versions of the content item from a cloud cache agent in case said user action is "view".

### Brief Description of the Drawings

Fig. 1 is a block diagram showing a cloud storage system wherein an embodiment of the method for accessing a content item according to the present invention is implemented;

Fig. 2 illustrates the message flow for accessing a content item in view mode in an embodiment of the present invention;

Fig. 3 illustrates a cloud cache eviction scheme as implemented by an embodiment of the cloud cache agent according to the present invention; and

Fig. 4 illustrates a cloud cache update scheme as implemented by an embodiment of the cloud cache agent according to the present invention.

### Detailed Description of Embodiment(s)

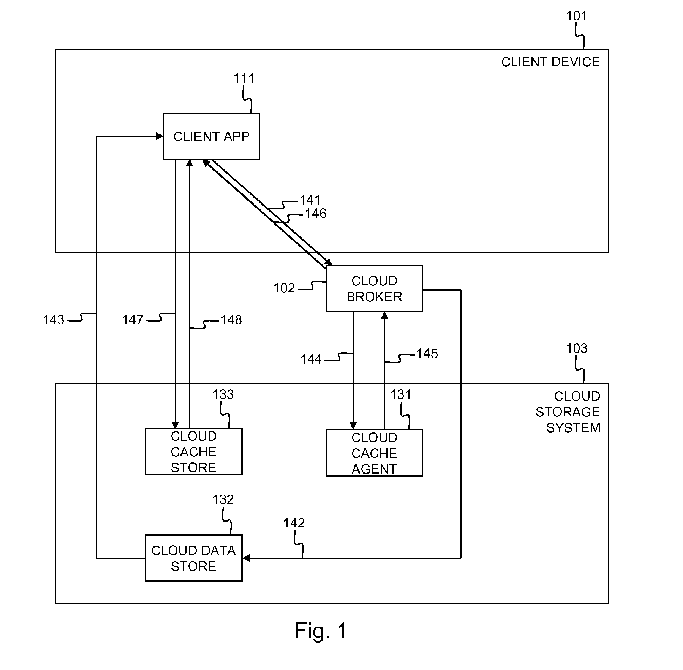

Fig. 1 shows a block diagram with a client device 101 whereon a client application, 111 or CLIENT APP, is running that connects with a backend cloud storage system 103 via an HTTP cloud broker 102. The cloud storage system 103 comprises a cloud data store 132, i.e. memory space on one or plural servers to store user data, a cloud cache store 133, i.e. limited memory space that is faster accessible than the cloud data store 132 for caching popular user data, and a cloud cache agent 131. The cloud cache store 133 more precisely represents storage space that is used to store HTML presentations of popular cloud content.

The client application 111 on client device 101 connects to the cloud storage system 103 using the HTTP cloud broker 102. This is indicated by request 141 in Fig. 1. In this request 141, the client application 111 indicates which content item it desires to access and the client application 111 also indicates if the content item is consulted for "edit" or "view" purposes. Based on the user action as specified in request 141, i.e. either "edit" or "view", the HTTP cloud broker 144 will either contact the cloud cache agent and request in message 144 an URL to an HTML representation of the content item for "view" purposes, or the HTTP could broker 102 will tunnel the client's "edit" request via message 142 to the appropriate application in the cloud storage system 103 in order to obtain the editable content item as stored in the cloud data store 132. In the latter case, the cloud data store 132 delivers the editable version of the content item to the client application 111. The delivery of the editable content item may be direct or via the cloud broker 102. In the case where the cloud cache agent 131 was consulted, the cloud cache agent shall return in message 145 the URL to the appropriate HTML version of the content item, and the cloud broker 102 shall return this URL to the HTML version in message 146 to the client application 111 that issued the request. In case that the content item is not yet available in HTML format, the HTTP cloud broker 102 will instruct the cloud cache agent 131 to prepare the appropriate HTML version of the content item, and once this HTML version is available, send the URL which points to this HTML version in the cloud cache store 133 back to the client application 111. The client application 111 thereafter uses the URL to retrieve the HTML version suited for view on client device 101 from the cloud cache store 133. The client application 111 thereto contacts the cloud cache store 133 is illustrated by 147 in Fig. 1, and the cloud cache agent 133 returns the HTML version in message 148. Retrieving the HTML version from cloud cache store 133 shall typically run over a separate, dedicated HTTP proxy server.

The cloud cache agent 131 is an application that resides in the cloud storage system 103, that periodically checks the content of the cloud data store 132 and that creates one or more HTML presentations of certain content items for temporary storage in the cloud cache store 133. In order to select the cloud content items that will be cached in HTML format and/or to deduct whether certain content items should be removed from the cloud cache store 133, the cloud cache agent 131 uses information about the user cache space size in the cloud cache store 133, the view count per cloud content item, the time expired since the last view/access time, and the MD5 checksum of the original cloud content item vs. the one that is cached.

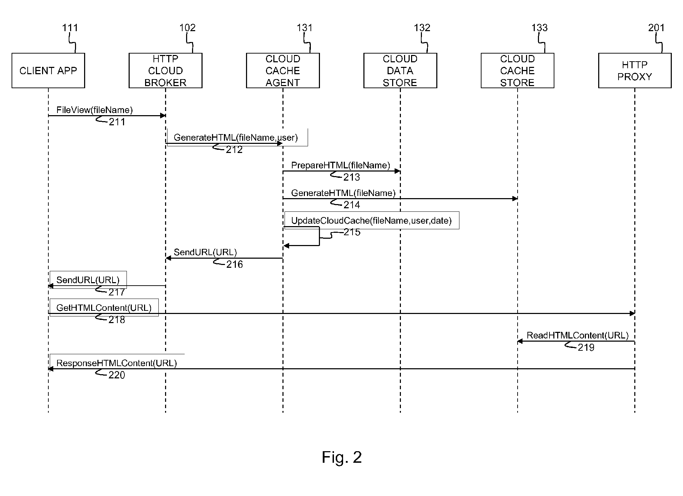

Fig. 2 again shows the client application 111, HTTP cloud broker 102, cloud cache agent 131, cloud data store 132 and cloud cache store 133 from Fig. 1. Fig. 2 in addition shows the HTTP proxy server 201 used for retrieving HTML content. It is further assumed in Fig. 2 that the client application 111 requests access to a user file for view purposes only at a point in time where the cloud cache store 133 does not yet contain an HTML representation of that file. Fig. 2 illustrates the sequence of messages between the different blocks.

In such case where cloud data, e.g. a file, are only needed in presentation form, the client application 111 sends a request, 211 or FileView, to the HTTP cloud broker 102, specifying the name of the file to be viewed, i.e. filename. HTTP cloud broker 102, upon receipt of the request for a file in view mode, will send a request to the cloud cache agent 131 to provide a link or URL to the HTML presentation of that file. This request is named GenerateHTML or 212 in Fig. 2 and contains as parameters the name of the file, filename, and an identification of the user requesting the file in view mode. The cloud cache agent 131, upon receipt of request 212 checks whether an appropriate HTML presentation of the file already exists for the user's device, e.g. the cloud cache agent checks availability in the cloud cache store 133 of an HTML presentation of the file with a given resolution suitable for the user's device. The cloud cache agent 131 also verifies whether the cached file still represents a valid HTML representation of the original data file stored in the cloud data store 132. In case that the original data file has changed since the last HTML generation, the HTML presentation of the file must be updated. If the appropriate HTML version of the file is cached and still valid, the cloud cache agent 131 will send an URL to the HTML version of the file back to the HTTP cloud broker 102. Otherwise, as assumed in Fig. 2, the cloud cache agent 131 will retrieve the original file from the cloud data store 132 and prepare an HTML presentation suited for the user's device. This is indicated by the message PrepareHTML(filename) or 213 in Fig. 2. Thereafter, the cloud cache agent 131 shall push the prepared HTML representation into the cloud cache storage 133, as is indicated by message GenerateHTML(filename) or 214 in Fig. 2. The cloud cache agent 131 shall update its cache register through the method UpdateCloudCache in order to memorize the file name, fileName, the user for whom the HTML version was created and the date/time of creation of the HTML version. Via the message SendURL or 216, the cloud cache agent 131 sends an URL to the created HTML file stored in cloud cache store 133 back to the HTTP cloud broker 102, and the latter returns this URL to the client application 111 via SendURL message 217. The client application 111 can then access the HTML file using the received URL. Typically, HTML content will be residing behind an HTTP proxy server 201, requiring the client application 111 to issue a request message named GetHTMLContent to the HTML proxy server 201, containing the URL. The HTTP proxy server 201 retrieves the HTML file from the cloud cache store 133 as is indicated by message ReadHTMLContent(URL) or 219, and returns the HTML file to the client application 111 in message ResponseHTMLContent(URL) or 220.

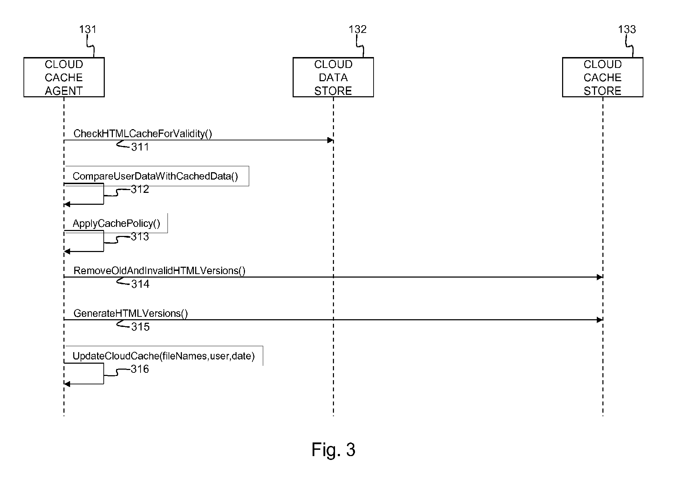

Fig. 3 also shows the cloud cache agent 131, cloud data store 132 and cloud cache store 133 from Fig. 1. Fig. 3 further illustrates the process applied by the cloud cache agent 131 for cache eviction. Obviously, many variant policies are conceivable as will be understood by a person skilled in the art, and the present invention is not restricted to application of a particular cache eviction policy.

Indeed, the cloud cache agent 131 must regularly check whether a cached HTML presentation is still valid for a given user, and eventually remove a cached HTML representation when it is no longer valid. In order to achieve this, the cloud cache agent 131 must keep the MD5 checksum of the original content item together with the cached HTML presentation of the original content item. In case that some clients have changed the original content item in the cloud data store 132 and the cloud cache agent 131 was not informed, the cloud cache agent 131 must generate a new HTML presentation and update the cloud cache store 133.

Another reason for cache eviction, i.e. removal of the HTML version of a file from the cloud cache store 133, may be the time expired since the last view date exceeds a certain threshold or the view count of a file drops below a certain threshold. The cloud cache agent 131 thereto can track the number of times a given file or content item was viewed by the clients for a given period of time and use this information in its eviction policy. In case that a content item has not been updated or viewed within a recent period of predetermined length, the cloud cache agent 131 can decide to remove the cached HTML file from the cloud cache store 133. The eviction policy may for instance depend on the storage space allocation per user. As an example, the cloud cache agent 131 might decide that 20 percent of the cache space must always be free.

Thus, in Fig. 3, the cloud cache agent 131 regularly checks the validity of an HTML file stored in the cloud cache store 133. Thereto the cloud cache agent 131 requests the original file to the cloud data store 132 via message CheckHTMLCacheForValidity() or 311. The received original file is compared with the cached file through method CompareUserDataWithCachedData() or 312. This method may compare MD5 checksums of the original and cached files. In the next step, the cloud cache agent 131 applies the applicable cache policy, as is indicated by method ApplyCachePolicy() or 313 in Fig. 3. As a result of the cache policy, old and invalid HTML representations will be removed from the cloud cache store 133 upon instructions from the cloud cache agent 131 in message RemoveOldAndInvalidHTMLVersions() or 314. Next, eventual new HTML versions are generated to replace the old and invalid HTML versions. Again, this is instructed by the cloud cache agent 131 in message GenerateHTMLVersions() or 315. At last, the cloud cache agent 131 updates its register of cached HTML files by running the method UpdateCloudCache. As a result the names of updated files, fileNames, the corresponding users and the date/time of update are memorized.

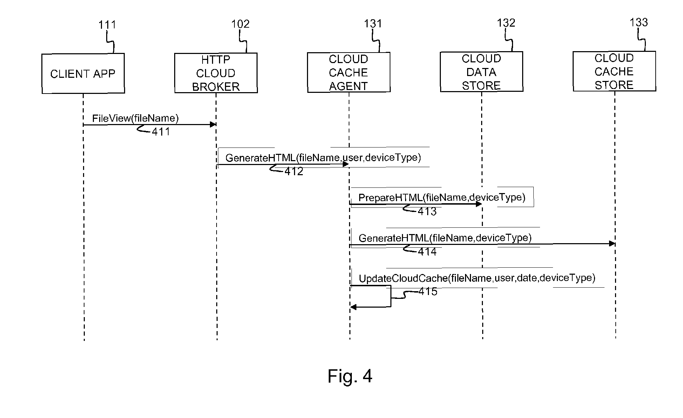

Fig. 4 shows the client application 111, HTTP cloud broker 102, cloud cache agent 131, cloud data store 132 and cloud cache store 133 of Fig. 1 and the message flow between these blocks in order to update the HTML cache.

The cloud cache agent 131 can use the information about the device type in order to prepare the best HTML presentation for a given device. This may take into account parameters like the image size, the image resolution, the encoding scheme for videos, the HTML layout, etc. Upon a view request from the client application 111 - such view request is represented by the message FileView(filename) in Fig. 4 and shall specify the device type in the HTTP request header - the HTTP cloud broke 102 shall issue a request, GenerateHTML or 412, to the cloud cache agent 131 wherein the name of the file, filename, the user, and the type of device, deviceType, are specified. Based on the device type specified in request message 412, the cloud cache agent 131 may decide to prepare a new HTML presentation of the file that is appropriate for the device type. The cloud cache agent hence uses the original file stored in the cloud data store 132 and prepares a new HTML version of the file, as is indicated by the method PrepareHTML(fileName,deviceType) or 413. The newly generated HTML version is forwarded to the cloud cache store 133 via GenerateHTML(fileName,deviceType) or 414 to be stored therein, and the cloud cache agent 131 updates its register with the file name, fileName, the user identification, the date and the type of device, deviceType, as is indicated by method UpdateCloudCache or 415 in Fig. 4. The cloud cache agent 131 thus can use this information to store available device types for a given user, and generate later HTML presentations only in format(s) that is/are suitable for device(s) that this user has.

It is noticed that there may be instances in which the same file might be shared between different users, such as for instance a university lecture shared by the students of the same year. In such case, the cloud cache agent 131 can decide to move the HTML presentation of a file with the same MD5 checksum for different users from the individual user's cache space to a common cloud cache space for efficiency reasons. In such case, the cloud cache agent 131 shall keep track of all users that share the same file, and use this information when any eviction policy is applied.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for accessing a content item in a cloud storage system (103) wherein an editable version of each content item is stored in a cloud data store (132) and one or more HTML versions of content items are stored in a cloud cache store (133), said method comprising:
A. sending from a client application (111) to a cloud broker (102) a request (141, 211, 411) for accessing said content item, said request (141, 211, 411) specifying a user action that is either "view" or "edit";
B. verifying at said cloud broker (102) if said user action is "view" or "edit"; and
C. in case said user action is "edit":
C1. sending from said cloud broker (102) to a dedicated application a request (142) for retrieving said editable version of said content item from said cloud data store (132); and
C2. delivering said editable version of said content item from said cloud data store (132) to said client application (111); or
D. in case said user action is "view":
D1. sending from said cloud broker (102) to a cloud cache agent (131) a request (144) for obtaining a URL to one of said HTML versions of said content item; and
D2. delivering said URL to one of said HTML versions of said content item from said cloud cache agent (131) to said client application (111).

2. A method for accessing a content item in a cloud storage system (103) according to claim 1, wherein in case no HTML version of said content item is available when executing said step D1, said cloud cache agent (131) generates an HTML version, stores said HTML version in said cloud cache store (133) and obtains a URL to said HTML version generated and stored in said cloud cache store (133).

3. A method for accessing a content item in a cloud storage system (103) according to claim 1, wherein said cloud cache store (133) is regularly updated.

4. A method for accessing a content item in a cloud storage system (103) according to claim 3, wherein regularly updating said cloud cache store (133) comprises eviction of HTML versions of content items whose view count during a recent time interval is below a predetermined threshold.

5. A method for accessing a content item in a cloud storage system (103) according to claim 3, wherein regularly updating said cloud cache store (133) comprises eviction of HTML versions of content items whose last view date and time is older than a predetermined threshold.

6. A method for accessing a content item in a cloud storage system (103) according to claim 1, wherein:
- said cloud cache agent (131) stores information indicative for types of devices used by one or more users to access said content item; and
- said one or more HTML versions of said content item are prepared to suit said types of devices used by said one or more users.

7. A method for accessing a content item in a cloud storage system (103) according to claim 1, wherein said cloud cache store (133) comprises individual users cache space for storage of one or more HTML versions of content items that are used by a single user and common cache space for storage of one or more HTML versions of content items that are used by plural users.

8. A cloud broker (102) adapted for use in a cloud storage system (103) wherein an editable version of each content item is stored in a cloud data store (132) and one or more HTML versions of content items are stored in a cloud cache store (133), said cloud broker (102) comprising:
A. an interface for receiving from a client application (111) a request (141, 211, 411) for accessing a content item, said request (141, 211, 411) specifying a user action that is either "view" or "edit";
B. verification logic for verifying if said user action is "view" or "edit";
C. an interface for sending to a dedicated application a request (142) for retrieving said editable version of said content item from said cloud data store (132) and for delivering said editable version of said content item to said client application (111) in case said user action is "edit"; and
D. an interface for sending to a cloud cache agent (131) a request (144) for obtaining a URL to one of said HTML versions of said content item and for delivering said URL to one of said HTML versions of said content item to said client application (111) in case said user action is "view".

9. A cloud cache agent (131) adapted for use in a cloud storage system (103) wherein an editable version of each content item is stored in a cloud data store (132) and one or more HTML versions of content items are stored in a cloud cache store (133), said cloud cache agent (131) comprising:
- an interface for receiving from a cloud broker (102) a request (144) for obtaining a URL to one of said HTML versions of a content item;
- an interface for delivering said URL to one of said HTML versions of said content item to a client application (111) that has sent a request (141) for accessing said content item, said request (141) specifying a user action that is "view"; and
- logic for generating an HTML version, storing said HTML version in said cloud cache store (133) and obtaining a URL to said HTML version generated and stored in said cloud cache store (133) in case no HTML version of said content item is available.

10. A client application (111) adapted for use in a cloud storage system (103) wherein an editable version of each content item is stored in a cloud data store (132) and one or more HTML versions of content items are stored in a cloud cache store (133), said client application (111) comprising:
- an interface for sending to a cloud broker (102) a request (141, 211, 411) for accessing said content item, said request (141, 211, 411) specifying a user action that is either "view" or "edit";
- an interface for receiving said editable version of said content item from said cloud data store (132) in case said user action is "edit"; and
- an interface for receiving an URL to one of said HTML versions of said content item from a cloud cache agent (131) in case said user action is "view".
